# EUROPEAN PATENT SPECIFICATION

(11) **EP 0 705 090 B1**
(45) Date of publication and mention of the grant of the patent: **15.09.1999**
(21) Application number: 95915949.2
(22) Date of filing: 21.04.1995
(51) Int. Cl.: A61G 5/04, B60L 3/00, B60K 7/00

(54) **VEHICLE HAVING REMOVABLE DRIVE ASSEMBLY**
FAHRZEUG MIT ABNEHMBARER ANTRIEBSVORRICHTUNG
VEHICULE POURVU D'UN ENSEMBLE D'ENTRAINEMENT DEMONTABLE

(30) Priority: 22.04.1994 GB 9408005
(43) Date of publication of application: 10.04.1996
(73) Proprietor: SUNRISE MEDICAL LIMITED, Wollaston, West Midlands DY8 4PS (GB)
(72) Inventor: VIRGO, Brian, Vernon, Old Arley North Warwickshire CV7 8FW (GB)
(74) Representative: Dodd, Graham Marshall
(86) International application number: GB9500909
(87) International publication number: WO9528903

(56) References cited:
- EP-A- 0 588 353
- GB-A- 2 281 727
- US-A- 5 333 702

## Description

### Description of Invention

This invention relates to electrically propelled vehicles, which each include a removable drive assembly.

The invention has been devised in relation to the type of vehicle whose purpose is to carry a person whose mobility is impaired. For example, the vehicle may be a wheelchair. Many such vehicles are adapted to be comparatively readily dismantled, and/or folded, collapsed, or otherwise converted, to a relatively compact configuration to enable them conveniently to be stored, or transported in another vehicle. Such dismantling or conversion may involve the removal of one or more drive assemblies from the remainder of the vehicle. Such a removable drive assembly may comprise an electric motor, reduction gear box, and a single wheel (two such drive assemblies being provided for the two driving wheels of a powered wheelchair) or possibly may comprise an axle assembly which includes an electric motor, reduction gear which may incorporate a differential gearing arrangement, and two drivable wheels at the ends of the axle assembly. In addition to the conversion of the vehicle to a compact, readily stored or transported, condition, the or each such drive assembly is a relatively heavy unit and its or their removal reduces the vehicle to units which are more readily handled and lifted.

In broad terms, the requirements for one or more removable such drive assemblies for a vehicle are that the removal and replacement thereof from the vehicle should be relatively easy to carry out for persons who may not be mechanically adept, and this should be consistent with a high level of safety in use. It is broadly one object of the present invention to meet such requirements.

The or each drive assembly of an electrically propelled vehicle according to the invention incorporates an electric motor, and this of course requires an electrical connection to be made to the motor. Such electrical connection should be capable of being broken when the drive assembly is to be removed, since it is usual for batteries for powering the vehicle and control gear to be carried by the frame of the vehicle. EP-A-0588353 discloses a personal mobility vehicle for the disabled which has an electric drive unit separable from the main chassis of the vehicle. An electrical connector is integrated with the mechanical coupling between these two units, so that as the units come together the electrical connectors engage to provide a power supply to the electric drive unit. However, it is to be expected that an electrical connection can be achieved before connection of the drive unit to the chassis is fully completed. For reasons of safety, it is desirable that the electrical connection should not be able to be established with the motor of the drive assembly until the drive assembly is properly connected to the frame of the vehicle.

With this more particular object in mind, according to one aspect of the invention we provide a vehicle including a frame, a drive assembly including an electric motor and at least one ground-engaging wheel; inter-engaging formations associated with the drive assembly and frame and providing a releasable connection therebetween; catch means for holding said formations in engagement, said catch means being movable between a retaining position in which it holds said formations in engagement and a releasing position in which it permits disengagement thereof; and releasable electrical connector means for establishing an electrical connection to the motor of the drive assembly; wherein the catch means permits the electrical connection to be established by the electrical connector means only when the catch means is in its retaining position.

Preferably when the electrical connector means is engaged it prevents the catch means from being moved to its releasing position.

Preferably disengagement of said formations to permit removal of the drive assembly from the frame requires a downwards movement of the drive assembly relative to the frame having regard to the normal orientation of the vehicle in use.

By virtue of the provision of interengaging formations which for disengagement from one another, to remove the drive assembly from the frame, require downwards movement of the drive assembly relative to the frame, the weight of the frame of the vehicle and a person carried thereby assists in holding the drive assembly connected to the frame. There is therefore a high degree of security of the connection of the drive assembly to the frame, against unintentional release of the drive assembly.

There may be guide means for guiding the interengaging formations into correct engagement.

Preferably one of the inter-engaging formations comprises a socket formation, which has a tapered mouth for guiding a plug formation, constituting the other of the interengaging formations, into it.

The provision of formations of this configuration renders the connection of the drive assembly to the frame a comparatively straightforward operation, particularly to a person who may not have a high degree of mechanical aptitude. Preferably both the plug formation and socket formation are of tapering configuration, to give a firm engagement therebetween without play or looseness.

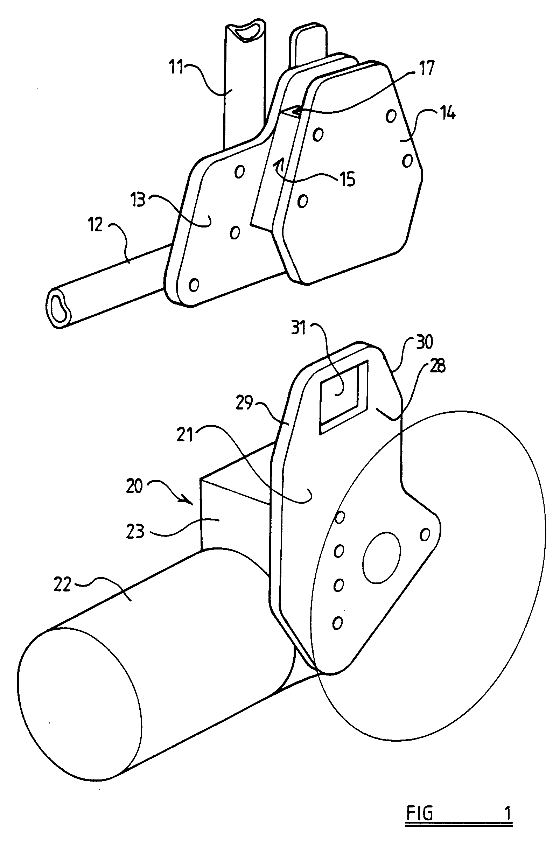

These and other aspects and advantages of the invention will now be described by way of example with reference to the accompanying drawings, of which:-
Figure 1 is a diagrammatic exploded perspective view of part of a vehicle according to the invention, showing the parts providing a releasable connection between the frame and drive assembly of the vehicle;

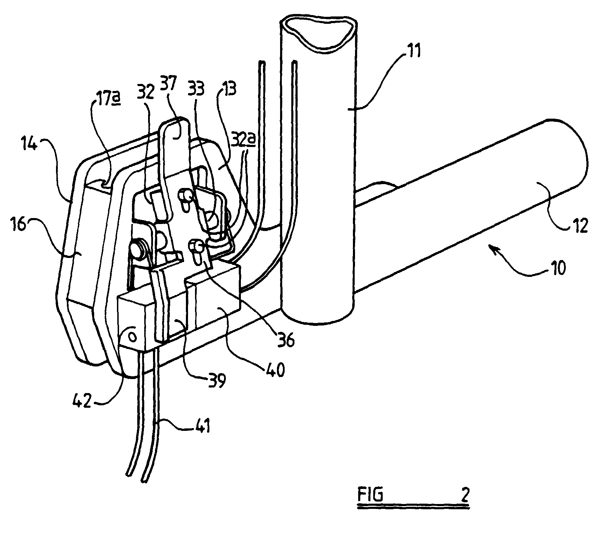

Figure 2 is a diagrammatic perspective view, from the opposite side to the view of Figure 1, of part of the vehicle;
Figure 3 is a vertical section through the assembly of Figure 1;

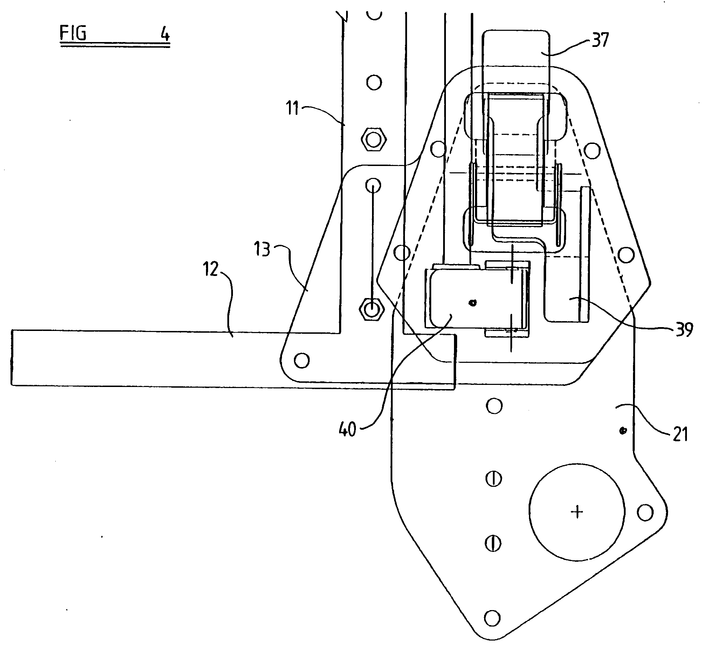

Figure 4 is a diagrammatic lateral view of part of the assembly.

In the drawings, part of the frame of a vehicle, such as a wheelchair, is indicated generally at 10, comprising generally vertically and horizontally extending tubular members 11, 12. A plate 13 is secured to the tubular members 11, 12 at the position where they join, being fastened by welding or by releasable fasteners such as bolts. A plate 14 is held to the plate 13, in spaced parallel relation thereto, by bolts extending through the two plates and through spacer elements 15, 16 therebetween. The spacer elements, which are made of a tough plastics material such as "Delrin" are oriented such that they converge towards one another as they extend upwardly, the spacer elements and plates 13, 14 defining a socket which as viewed in side view is of generally wedge-shaped configuration with its wide mouth at its lower end, facing downwardly. The spacer elements 15, 16 are each of generally U-shape in cross-section, defining grooves facing one another as indicated in part at 17 for the spacer element 15 and 17a for the element 16.

A drive assembly, indicated generally at 20, comprises a mounting plate 21 to which is bolted a unit comprising an electric motor 22 and worm drive reduction gear box 23, the latter having an output shaft 24 which carries a wheel 25 with tyre 26. A retainer assembly for holding the wheel on the shaft 24, and for transmitting torque from shaft to wheel, is indicated generally at 27.

Above the shaft 24, the mounting plate has a portion 28 which is of tapered configuration, having sides 29, 30 which converge towards one another as they extend upwardly. Between the sides 29, 30 there is a rectangular opening 31. The tapering of the sides 29, 30 matches that of the spacer elements 15, 16, so that upon entering of the portion 28 of the mounting plate 21 into the socket defined by plates 13, 14 and the spacers, a position is reached wherein the portion 28 of the plate 21 is engaged in the grooves of the spacers 15, 16 and firmly gripped thereby.

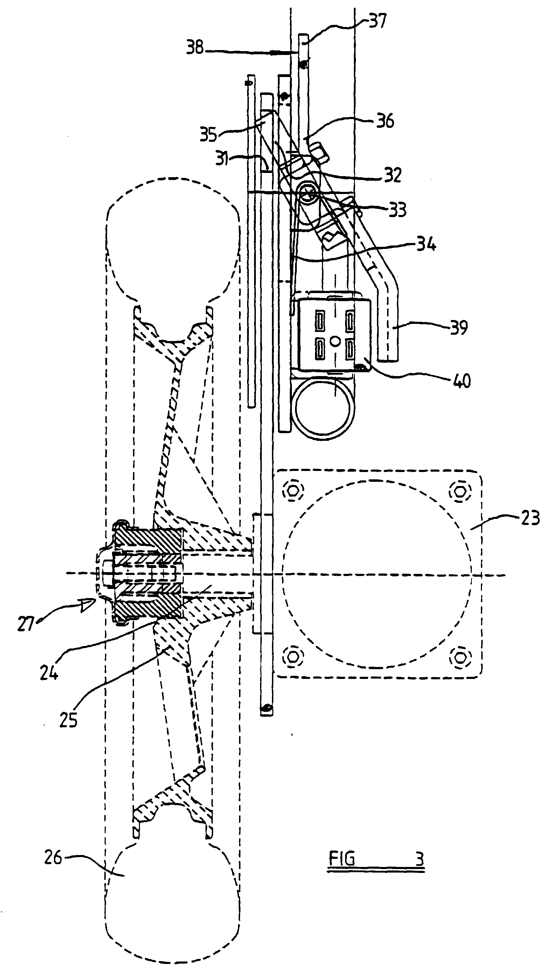

Catch means is provided for holding the drive assembly of the vehicle in engagement with the frame of the vehicle when the position above described has been reached. A catch element 32 is secured by bolts 32a to an element 36 which is pivoted about a pivot pin 33 held by flanges pressed out of the plate 13 and spring biased by a spring 34 to a position in which a nose portion 35 of the catch element extends through an opening in the plate 13 and is engageable with the upper edge of the aperture 31 in the plate portion 28. When thus engaged it retains the drive assembly to the frame of the vehicle. To enable disconnection of the drive assembly, the catch element 32 must be pivoted with the element 36 in the clockwise direction, with respect to Figure 3, against the biasing force of the spring 34, and to enable this to be done the element 36 has an upper portion 37 which is accessible to the hand, to be pushed in the direction of arrow 38 for disengagement of the catch element as above described. The element 36 further has a downwardly extending blocking portion 39.

The bolts 32a holding the catch element 32 to the pivoted element 36 extend through elongated holes in the latter, so that the position of the catch element can be adjusted and set to be able to hold the plate portion 28 in a full and play-free engagement with the socket 13, 14, 15, 16. Such setting may be required during manufacture, to accommodate production tolerances, and may be altered if any wear should occur after long use.

For providing an electrical connection to the motor 22 from electrical wiring fixed to the frame of the vehicle, such wiring being connected to a suitable control mechanism and a battery or batteries which provide the power for the vehicle, an electrical socket 40 is fixed to the plate 13. The motor has electrical wires 41 extending therefrom terminating in a plug 42 engageable with the socket 40. The disposition of the socket 40 is such that the plug 42 is only able to be engaged therewith when the catch element 32 is so positioned such that the blocking portion 39 of the element 36 is clear of the socket 40. When the plug 42 is engaged with the socket 40, the presence of the plug, engageable by the blocking portion 39 of the element 36, prevents the element from being moved to disengage the catch element 32 from the plate portion 28.

Thus it is not possible to move the catch element 32 to its releasing position, to enable the drive assembly to be disengaged from the frame of the vehicle, until the plug 42 has been disengaged from the socket 40. During connection of the drive assembly to the vehicle, the blocking portion 39 prevents engagement of the plug 42 with the socket 40 until the drive assembly has been correctly engaged with the frame of the vehicle and the catch assembly assumes the position shown in Figure 3.

The invention thus provides a vehicle such as, for example, a wheelchair, with a removable drive assembly which has several advantages in terms of safety and ease of use. The configuration of the interengaging formations of the frame of the vehicle and the drive assembly respectively as a downwardly opening socket (13, 14, 15, 16) and a plug element engageable therein (28) means that the weight of the frame of the vehicle and a person carried thereby tends to keep the drive assembly firmly in correct engagement with the vehicle in use. Such security is of course assisted by the catch element 32. The tapering configuration of the socket acts as a guide for guiding the drive assembly into correct engagement, rendering connection of the drive assembly to the frame an operation which is relatively easily carried out, particularly for a person who may not be mechanically adept or possibly even may be incapacitated. The tapering configuration of the socket and plug element also ensures that when they are engaged they do so in a positive manner without play or looseness, and the adjustability of the catch element ensures that it is operable to hold such an engagement whilst allowing for manufacturing tolerances and wear in use. The cooperation of the blocking portion 39 of the catch means with the plug and socket of the electrical connector for the motor of the drive assembly provides a further element of safety against establishment of the electrical connection if the drive assembly is not correctly fitted to the frame, and against removal of the drive assembly from the frame without electrical disconnection of the motor.

## Claims

1. An electrically propelled vehicle including a frame (10); a drive assembly (20) including an electric motor (22) and at least one ground engaging wheel (25); interengaging formations (13-16, 28) associated with the drive assembly and frame and providing a releasable connection therebetween; catch means (32-36) for holding said formations in engagement with one another, said catch means being movable between a retaining position in which it holds said formations in engagement and a releasing position in which it permits disengagement thereof; releasable electrical connector means (40, 42) for establishing an electrical connection to the motor of the drive assembly; wherein the catch means (32-36) permits the electrical connection to be established by the electrical connector means (40, 42) only when the catch means is in its retaining position.

2. A vehicle according to claim 1 wherein, when the electrical connector means (40,42) is engaged, it prevents the catch means (32-36) from being moved to its releasing position.

3. A vehicle according to claim 1 or claim 2 wherein said catch means comprises a pivoted element (36).

4. A vehicle according to claim 3 wherein said pivoted element comprises a blocking portion (39) cooperable with said electrical connector means (40, 42).

5. A vehicle according to any one of the preceding claims wherein said catch means includes an adjustable catch member (32).

6. A vehicle according to any one of the preceding claims wherein said catch means is resiliently biased to its retaining position.

7. A vehicle according to any one of the preceding claims wherein said drive assembly comprises a single wheel (25).

8. A vehicle according to any one of claims 1 to 6 wherein said drive assembly comprises an axle and two wheels at the ends thereof.

9. A vehicle according to any one of the preceding claims wherein disengagement of said formations (13-16, 28) to permit removal of the drive assembly from the frame requires a downwards movement of the drive assembly (20) relative to the frame (10) having regard to the normal orientation of the vehicle in use.

10. A vehicle according to any one of the preceding claims further comprising guide means for guiding said interengaging formations into correct engagement with one another.

11. A vehicle according to claim 10 wherein one of the interengaging formations comprises a socket formation (13-16) including a tapered mouth for guiding a plug formation (28), constituting the other of the interengaging formations, into it.

12. A vehicle according to claim 11 wherein said plug formation (28), and socket formation (13-16) are both of tapering configuration.

## Patentansprüche

1. Elektrisch betriebenes Fahrzeug mit einem Rahmen (10); einer Fahreinheit (20) mit einem elektrischen Motor (22) und mindestens einem bodenberührenden Rad (25); ineinandereingreifenden Gebilden (13-16, 28), die mit der Fahreinheit und dem Rahmen verbunden sind und eine lösbare Verbindung zwischen diesen bilden; einer Rasteinrichtung (32-36) um die Gebilde miteinander in Eingriff zu halten, wobei die Rasteinrichtung zwischen einer Haltestellung, in der sie die Gebilde in Eingriff hält und einer Freigabestellung beweglich ist, in der sie deren Außer-Eingriff-Bringen zuläßt; lösbaren elektrischen Verbindungseinrichtungen (40, 42) zum Herstellen einer elektrischen Verbindung zum Motor der Fahreinheit; wobei die Rasteinrichtung (32-36) das Herstellen der elektrischen Verbindung durch die elektrischen Verbindungseinrichtungen (40, 42) nur zuläßt, wenn die Rasteinrichtung in ihrer Haltestellung ist.

2. Fahrzeug nach Anspruch 1, bei dem, wenn die elektrische Verbindungseinrichtung (40, 42) in Eingriff ist, sie die Bewegung der Rasteinrichtung (32-36) in die Freigabestellung verhindert.

3. Fahrzeug nach Anspruch 1 oder 2, bei dem die Rasteinrichtung ein schwenkbares Element (36) umfaßt.

4. Fahrzeug nach Anspruch 3, bei dem das schwenkbare Element einen blockierenden Teil (39) umfaßt, der mit der elektrischen Verbindungseinrichtung (40, 42) zusammenwirken kann.

5. Fahrzeug nach einem der vorhergehenden Ansprüche, bei dem die Rasteinrichtung ein einstellbares Rastglied (32) umfaßt.

6. Fahrzeug nach einem der vorhergehenden Ansprüche, bei dem das Rastglied federnd in seine Haltestellung vorgespannt ist.

7. Fahrzeug nach einem der vorhergehenden Ansprüche, bei dem die Fahreinheit ein einzelnes Rad (25) aufweist.

8. Fahrzeug nach einem der Ansprüche 1 bis 6, bei dem die Fahreinheit eine Achse und zwei Räder an deren Enden aufweist.

9. Fahrzeug nach einem der vorhergehenden Ansprüche, bei dem zum Außer-Eingriff-Bringen der genannten Gebilde (13-16, 28), um die Abnahme der Fahreinheit von dem Rahmen zuzulassen, eine Abwärtsbewegung der Fahreinheit (20) bezüglich des Rahmens (10) erforderlich ist, bezogen auf die normale Orientierung des Fahrzeugs beim Gebrauch.

10. Fahrzeug nach einem der vorhergehenden Ansprüche, das ferner Führungseinrichtungen zum Führen der genannten ineinandergreifenden Gebilde in korrekten Eingriff ineinander aufweist.

11. Fahrzeug nach Anspruch 10, bei dem eines der ineinander eingreifenden Gebilde ein Hülsengebilde (13-16) mit einer sich verjüngenden Öffnung zum Führen eines steckergebildes (28) in es hinein umfaßt, daß das andere der ineinander eingreifenden Gebilde darstellt.

12. Fahrzeug nach Anspruch 11, bei dem das Steckergebilde (28) und das Hülsengebilde (13-16) beide von sich verjüngender Gestalt sind.

## Revendications

1. Véhicule à propulsion électrique, comprenant un châssis (10) ; un ensemble d'entraînement (20) comportant un moteur électrique (22) et au moins une roue (25) en contact avec le sol ; des formations à engagement réciproque (13 à 16, 28) associées à l'ensemble d'entraînement et au châssis et constituant une connexion libérable entre ceux-ci ; des moyens de blocage (32 à 36) pour maintenir lesdites formations en prise réciproque, lesdits moyens de blocage étant mobiles entre une position de retenue, dans laquelle ils maintiennent lesdites formations en prise, et une position de libération, dans laquelle ils permettent le désengagement de celles-ci ; un moyen formant connecteur électrique (40, 42) libérable pour établir une connexion électrique vers le moteur de l'ensemble d'entraînement, dans lequel les moyens de blocage (32 à 36) ne permettent l'établissement de la connexion électrique par le moyen formant connecteur électrique (40, 42) que lorsque les moyens de blocage sont dans leur position de retenue.

2. Véhicule selon la revendication 1, dans lequel, lorsque le moyen formant connecteur électrique (40, 42) est en prise, il empêche le déplacement des moyens de blocage (32 à 36) vers leur position de libération.

3. Véhicule selon la revendication 1 ou la revendication 2, dans lequel lesdits moyens de blocage comprennent un élément monté sur pivots (36).

4. Véhicule selon la revendication 3, dans lequel ledit élément monté sur pivots comprend une partie verrouillage (39) propre à coopérer avec ledit moyen formant connecteur électrique (40, 42).

5. Véhicule selon l'une quelconque des revendications précédentes, dans lequel lesdits moyens de blocage comprennent un élément de blocage (32) réglable.

6. Véhicule selon l'une quelconque des revendications précédentes, dans lequel lesdits moyens de blocage sont élastiquement sollicités vers leur position de retenue.

7. Véhicule selon l'une quelconque des revendications précédentes, dans lequel ledit ensemble d'entraînement comprend une roue (25) unique.

8. Véhicule selon l'une quelconque des revendications 1 à 6, dans lequel ledit ensemble d'entraînement comprend un essieu et deux roues aux extrémités de celui-ci.

9. Véhicule selon l'une quelconque des revendications précédentes, dans lequel le désengagement desdites formations (13 à 16, 28) pour permettre de retirer du châssis l'ensemble d'entraînement nécessite un mouvement descendant de l'ensemble d'entraînement (20) par rapport au châssis (10), eu égard à l'orientation normale du véhicule en service.

10. Véhicule selon l'une quelconque des revendications précédentes, comprenant en outre des moyens de guidage servant au guidage desdites formations à engagement réciproque pour qu'elles viennent correctement en prise mutuelle.

11. Véhicule selon la revendication 10, dans lequel l'une des formations à engagement réciproque comprend une formation formant réceptacle (13 à 16), comprenant une embouchure à effilement progressif pour recevoir, en la guidant, une formation formant fiche (28) constituant l'autre des formations à engagement réciproque.

12. Véhicule selon la revendication 11, dans lequel ladite formation formant fiche (28) et ladite formation formant réceptacle (13 à 16) ont toutes deux une conformation à effilement progressif.
